# EUROPÄISCHE PATENTANMELDUNG

(11) **EP 1 367 389 A1**
(43) Veröffentlichungstag der Anmeldung: **03.12.2003**
(21) Anmeldenummer: 02405434.8
(22) Anmeldetag: 30.05.2002
(51) Int. Cl.: G01N 29/10

(54) **Verfahren zum zerstörungsfreien Ultraschallprüfen einer Verbundstromschiene**

(71) Anmelder: Alcan Technology & Management Ltd., 8212 Neuhausen am Rheinfall (CH)
(72) Erfinder: Netzel, Timo, 06844 Dessau (DE)

(57) **Zusammenfassung**

Bei einem Verfahren zum zerstörungsfreien Prüfen des Abriebverhaltens einer Verbundstromschiene (10) mit einem Tragkörper (12) aus Aluminium und einer verschleissarmen, einem Abrieb durch schleifende elektrische Stromabnehmer unterworfenen bandförmingen Auflage (14) aus nichtrostendem Stahl werden an ausgewählten Prüfstellen (A,B,C) mit einem Ultraschall-Sender/Empfänger (20) Ultraschallimpulse auf die Stahlbandauflage (14) übertragen. Der Laufzeitunterschied zwischen den an der Kontaktfläche (16) und den an der Rückseite (18) der Stahlbandauflage (14) reflektierten Ultraschallimpulsen wird gemessen. Aus dem Laufzeifunterschied und der Schallgeschwindigkeit in der Stahlbandauflage (14) werden die lokalen Dicken (d_{A,B,C)}) der Stahlbandauflage (14) an den ausgewählten Prüfstellen (A,B,C) berechnet.

## Beschreibung

Die Erfindung betrifft ein Verfahren zum zerstörungsfreien Prüfen des Abriebverhaltens einer Verbundstromschiene mit einem Tragkörper aus Aluminium und einer verschleissarmen, einem Abrieb durch schleifende elektrische Stromabnehmer unterworfenen bandförmigen Auflage aus nichtrostendem Stahl.

Verbundstromschienen bestehen im allgemeinen aus einem den elektrischen Strom leitenden Tragkörper aus Aluminium mit einer verschleissarmen bandförmigen Auflage aus nichtrostendem Stahl. Im Betrieb schleifen elektrische Stromabnehmer auf der Stahlbandauflage der Verbundstromschiene. Die schleifende Kontaktierung führt zu einem Abrieb an der Stahlbandauflage, wobei der Abrieb je nach Stromabnehmertyp und Auflagewinkel des Stromabnehmers auf der Stahlbandauflage an den Rändern oder in der Mitte der Auflage auftritt.

Verbundstromschienen müssen periodisch auf Abrieb untersucht und ggf. ausgetauscht werden. Das Abriebverhalten der Stromschienen gibt Auskunft über die Lebensdauer des Systems. Durch Bestimmung des Abriebs können über die Breite einer Stromschiene lokal unterschiedliche Anpresskräfte und Anstellwinkel des Stromabnehmers auf der Stahlbandauflage festgestellt und gegebenenfalls technische Korrekturen, z.B. durch Einstellen des Stromabnehmers, durchgeführt werden. Ein möglichst frühzeitiges Erkennen eines ungleichmassigen Abriebverhaltens setzt jedoch ein Messverfahren voraus, mit welchem eine Bestimmung der lokalen Restdicke der Stahlbandauflage mit hinreichend grosser Genauigkeit durchgeführt werden kann.

Die heute üblichen Verfahren zur Bestimmung des Abriebs von Verbundstromschienen beruhen auf der mechanischen Messung der Restdicke der Stahlbandauflage. Die hierzu verwendeten Messschieber und Messlehren führen jedoch zu unbefriedigenden Ergebnissen, da der Abrieb oft nicht gleichmässig über die gesamte Breite der Stahlbandauflage erfolgt, sondern häufig an einem oder an beiden Rändern oder in der Mitte. Bei einem derart ungleichmässigen Abrieb führt ein Messschieber zu einem ungenauen Ergebnis, da die Messung über die gesamte Breite erfolgt. Eine Messlehre kann zwar zu etwas besseren Resultaten führen, jedoch können Messungen nur im ausgebauten Zustand der Stromschiene vorgenommen werden. Zudem muss bei diesem Verfahren die Stromschiene zur Ermittlung der Restdicke der Stahlbandauflage teilweise zerstört werden.

Der Erfindung liegt die Aufgabe zugrunde, ein zerstörungsfreies Prüfverfahren bereitzustellen, mit welchem das Abriebverhalten von Verbundstromschienen der eingangs genannten Art auf einfache Weise und ohne Ausbau der Stromschienen durch präzises Messen der lokalen Restdicke der Stahlbandauflage bestimmt werden kann.

Zur erfindungsgemässen Lösung der Aufgabe führt, dass an ausgewählten Prüfstellen Ultraschallimpulse auf die Stahlbandauflage übertragen werden, der Laufzeitunterschied zwischen den an der Kontaktfläche und den an der Rückseite der Stahlbandauflage reflektierten Ultraschallimpulsen gemessen wird und aus dem Laufzeitunterschied und der Schallgeschwindigkeit in der Stahlauflage die lokalen Dicken der Stahlbandauflage an den ausgewählten Prüfstellen berechnet werden.

Bei einer bevorzugten Ausführungsform des erfindungsgemässen Verfahrens wird ein Ultraschall-Sender/Empfänger an den ausgewählten Prüfstellen direkt auf die Stahlbandauflage aufgesetzt.

Bei herkömmlichen Verbundstromschienen liegt die Dicke der Stahlbandauflage etwa zwischen 4 und 6 mm. Für diesen Dickebereich erweist sich eine Ultraschallimpulsfrequenz zwischen 6 und 10 MHz, insbesondere etwa 8 MHz, als zweckmässig.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Querschnitt durch eine Verbundstromschiene;
- Fig.2 das Prinzip der zerstörungsfreien Prüfung der Verbundstromschiene von Fig. 1 mit mittigem Abrieb.

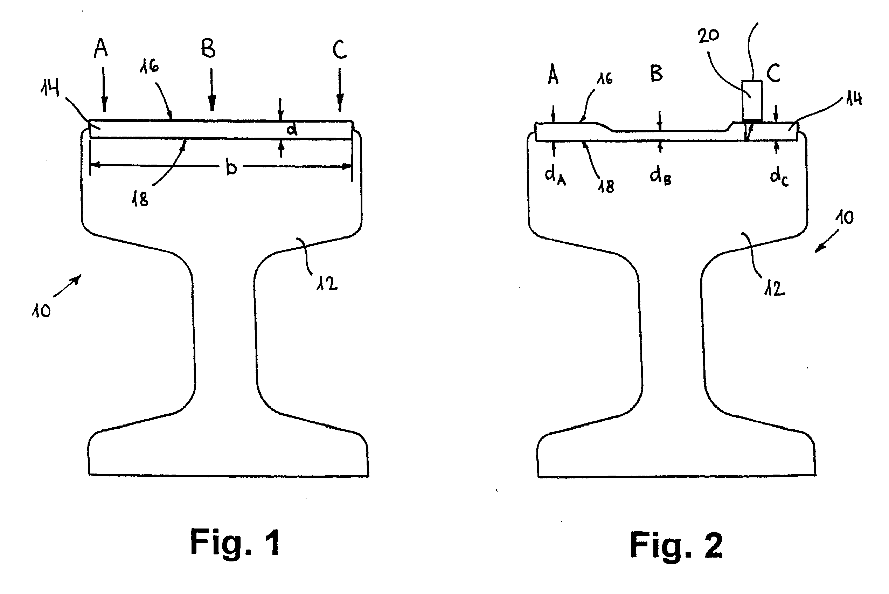

Eine in Fig. 1 gezeigte Verbundstromschiene 10 weist einen Tragkörper 12 aus Aluminium mit einer Auflage 14 aus nichtrostendem Stahl auf. Die Breite b der Stahlbandauflage 14 beträgt beispielsweise 50 mm, die Dicke d beispielsweise 5 mm. Eine Herstellungsart der Verbundstromschiene 10 ist beispielsweise in der DE-C-24 32 541 offenbart.

Der in der Praxis durch schleifende elektrische Stromabnehmer auftretende Abrieb an der Stahlbandauflage 14 erfolgt häufig am linken Rand A, am rechten Rand C, an beiden Rändern A, C oder in der Mitte B. Zweckmässigerweise werden deshalb zur Bestimmung des Abriebverhaltens längs einer Verbundstromschiene 10 beispielsweise alle 500 mm, für genauere Bestimmungen etwa alle 200 bis 300 mm, jeweils drei Messungen über die Breite b der Stahlbandauflage an den randseitigen Prüfstellen A, C sowie in der Mitte B durchgeführt.

Bei der in Fig. 2 dargestellten Verbundstromschiene ist der Abrieb an der Stahlbandauflage 14 etwa mittig an der Position B erfolgt, während am linksseitigen Rand A und am rechtsseitigen Rand B praktisch kein Abrieb festgestellt werden kann. Dieses lokale Abriebverhalten wird mit einem Ultraschall-Sender/Empfänger 20 auf einfache Weise ermittelt, indem die Laufzeitdifferenz der an der Kontaktfläche 16 und an der Rückseite 18 der Stahlbandauflage 14 reflektierten Ultraschallimpulse gemessen werden. Bei Kenntnis der Schallgeschwindigkeit in der Stahlbandauflage 14, die an einem Stahlband mit definierter Dicke bestimmt werden kann, lassen sich auf einfache Weise die lokalen Dicken d_{A,B,c} der Stahlbandauflage 14 ermitteln.

Ein geeignetes Gerät zur Dickenmessung der Stahlbandauflage ist das Echometer 1073 der Firma Karl Deutsch GmbH. Als optimal hat sich der Miniaturprüfkopf DSE 4.2/4 PB 8 herausgestellt. Die Messunsicherheit liegt bei etwa ⁺/-0,1 mm.

## Patentansprüche

1. Verfahren zum zerstörungsfreien Prüfen des Abriebverhaltens einer Verbundstromschiene (10) mit einem Tragkörper (12) aus Aluminium und einer verschleissarmen, einem Abrieb durch schleifende elektrische Stromabnehmer unterworfenen bandförmigen Auflage (14) aus nichtrostendem Stahl,
**dadurch gekennzeichnet, dass**
an ausgewählten Prüfstellen (A,B,C) Ultraschallimpulse auf die Stahlbandauflage (14) übertragen werden, der Laufzeitunterschied zwischen den an der Kontaktfläche (16) und den an der Rückseite (18) der Stahlbandauflage (14) reflektierten Ultraschallimpulsen gemessen und aus dem Laufzeitunterschied und der Schallgeschwindigkeit in der Stahlauflage (14) die lokalen Dicken (d_{A},_{B,C}) der Stahlbandauflage (14) an den ausgewählten Prüfstellen (A,B,C) berechnet werden.

2. Verfahren nach Anspruch 1, **dadurch gekennzeichnet, dass** ein Ultraschall-Sender/Empfänger (20) an den ausgewählten Prüfstellen (A,B,C) direkt auf die Stahlbandauflage (14) aufgesetzt wird.

3. Verfahren nach Anspruch 1 oder 2, **dadurch gekennzeichnet, dass** die Ultraschallimpulsfrequenz zwischen 6 und 10 MHz, insbesondere bei etwa 8 MHz, liegt.
